# EUROPEAN PATENT APPLICATION

(11) **EP 4 687 077 A1**
(43) Date of publication of application: **04.02.2026**
(21) Application number: 24215286.6
(22) Date of filing: 26.11.2024
(51) Int. Cl.: G06N 3/09, G06N 3/084, G06N 3/045, G06N 3/047, G06N 3/048, G06N 3/0464

(54) **METHOD AND DEVICE FOR LEARNING ARTIFICIAL INTELLIGENCE MODEL TO ESTIMATING EPISTEMIC UNCERTAINTY BASED ON SINGLE MODEL**

(30) Priority: 31.07.2024 KR 20240101850
(71) Applicant: Hyundai Motor Company, Seoul 06797 (KR); Kia Corporation, Seocho-gu Seoul 06797 (KR)
(72) Inventor: PARK, Jin Ho, Hwaseong-si, Gyeonggi-do 18280 (KR)
(74) Representative: Isarpatent

(57) **Abstract**

A single model-based learning method for estimating the uncertainty of an artificial intelligence (AI) model, the method comprising: generating an output distribution from a base network and a transformed output distribution from a transformed network, based on a result value generated by a feature network, wherein the transformed network is generated by applying adaptive noise to the base network; calculating a ground truth loss based on a difference between a ground truth distribution and the output distribution, and a similarity loss based on a difference between the output distribution and the transformed output distribution; and training the Al model, which includes the feature network and the base network, by updating the weights of the feature network and the base network through backpropagation of the ground truth loss and the similarity loss.

## Description

### TECHNICAL FIELD

The present disclosure relates to a method and device for learning an artificial intelligence model to estimate epistemic uncertainty, specifically using a single model approach. More particularly, the disclosure provides a method and device for robustly estimating the epistemic uncertainty of an artificial intelligence model through a single model, improving the model's performance by generating output in the form of a distribution.

### BACKGROUND

Tasks in the field of machine learning can be mainly divided into regression and classification, and activation functions such as the sigmoid function or the softmax function are typically used for these tasks.

However, there is a limitation to trusting the output of an artificial intelligence (AI) model and using the output as it is. For example, an AI model that has been fully trained on classification tasks may still perform those tasks within the trained scope, even when new or unfamiliar data are input, which may lead to errors.

In this case, the concept of uncertainty allows the AI model to express 'I do not know what I am ignorant of', and uncertainty is generally categorized into aleatoric uncertainty, which is inherent in the data, and epistemic uncertainty, which pertains to the model itself.

Epistemic uncertainty reflects how much the AI model knows about specific data, and it can be addressed through continuous learning with such data.

In order to estimate the uncertainty of a model itself, it is possible to use an ensemble technique that usually utilizes multiple models. According to this method, when data are input into several AI models with the same structure but different weights, consistent outputs suggest low uncertainty, while varied outputs indicate high uncertainty. In this approach, uncertainty can be estimated by considering the variance in output results.

Therefore, when the outputs of an AI model are represented as a distribution, variance can serve as an approximation of the model's uncertainty. In this way, uncertainty can be estimated based on the size of the variance in the outputs from a fully trained model.However, the use of a single model with outputs in the form of distribution has a limitation in utilizing variance of the outputs as a measure of the model's uncertainty. Such a limitation is attributable to the fact that the variance is not always equivalent to the uncertainty, and more fundamentally, to the fact that even a small change in the weights of an AI model may cause a significant change in the variance of the model's outputs.

Furthermore, although a multi-output technique using dropout and multiple inferences is a modeling technique for estimating the uncertainty of an AI model using a single model, the multi-output technique requires a multiple repetitions during the inference stage, which presents a limitation when applying it to problems that demands real-time performance.

### SUMMARY

The present disclosure is technically directed to providing a single model-based learning method and device capable of robustly estimating the epistemic uncertainty of an artificial intelligence model by using the single model to improve the performance of the artificial intelligence model that generates outputs in the form of distribution.

The technical problems solved by the present disclosure are not limited to the above technical problems and other technical problems which are not described herein will be clearly understood by a person having ordinary skill in the technical field to which the present disclosure belongs, from the following description.

A single model-based learning method may be performed by an apparatus for estimating the uncertainty of an artificial intelligence (AI) model. The single model-based learning method may comprise: based on a result value generated from a feature network, generating an output distribution from a base network and generating a transformed output distribution from a transformed network that is generated by reflecting adaptive noise in the base network; calculating a ground truth loss determined based on the difference between a ground truth distribution and the output distribution and a similarity loss determined based on the difference between the output distribution and the transformed output distribution; and training the AI model consisting of the feature network and the base network by updating the weights of the feature network and the base network through the backpropagation of the ground truth loss and the similarity loss.

The adaptive noise may be sampled to continuously vary during each training session from a Gaussian normal distribution, where a second variance is inversely proportional to a first variance of the output distribution.

The adaptive noise may be generated by applying a scaling factor, which is inversely proportional to a learning rate, to a result sampled from the Gaussian normal distribution.

The scaling factor may be absorbed into the result sampled from the Gaussian normal distribution, allowing the adaptive noise to be determined by the second variance as the learning rate decays.

The scaling factor may be designed to range between 0 and 1, converging to 1 as the learning rate decays, and is multiplied by the result sampled from the Gaussian normal distribution.

A weight of the transformed network may be altered by incorporating the adaptive noise into the weight of the base network.

The transformed network may be generated with the same structure as the base network, using weights determined by adding the adaptive noise to the base network's weights.

The ground truth loss may be calculated using a loss function that is determined by a form of ground truth data used for training the AI model.

The similarity loss may be calculated by a loss function that encourages the output distribution to follow the transformed output distribution.

The feature network and the base network may be designed according toa task of the AI model, with the output distribution generated by an activation function that transforms the base network's output into a distribution form.

A single model-based learning device, for estimating the uncertainty of an artificial intelligence (AI) model, may comprise: a memory configured to store at least one instruction; and a processor configured to execute the at least one instruction stored in the memory.The processor is further configured to: based on a result value generated from a feature network, generate an output distribution from a base network and generate a transformed output distribution from a transformed network by reflecting adaptive noise in the base network. It calculates a ground truth loss based on a difference between a ground truth distribution and the output distribution, as well as a similarity loss based on a difference between the output distribution and the transformed output distribution. The processor trains the AI model consisting of the feature network and the base network by updating the weights of the feature network and the base network through backpropagation of the ground truth and the similarity losses.

The features of the present disclosure, briefly summarized herein, are only examples of certain aspects of features of the present disclosure and detailed description of the disclosure which follows and are not intended to limit the scope of the present disclosure.

The technical problems addressed by the present disclosure are not limited to those mentioned above. Other technical problems solved by the present disclosure, which are not described herein should be readily understood by a person having ordinary skill in the art based on the following description.

According to the present disclosure, it is possible to provide a single model-based learning method and device capable of robustly estimating the epistemic uncertainty of an artificial intelligence model by using the single model to improve the performance of the artificial intelligence model that generates an output in the form of distribution.

Additionally, it is possible to overcome the limitations in memory and inference speed associated with ensemble techniques or multi inferences using multiple models to estimate the uncertainty of an existing model.

The benefits achievable from the present disclosure are not limited to the above-mentioned effects, and other effects not mentioned herein will be clearly understood by those skilled in the art through the following descriptions.

### BRIEF DESCRIPTION OF THE DRAWINGS

FIG. 1 shows an example of constituent modules of a learning device according to an embodiment of the present disclosure.
FIG. 2 shows a flowchart of a learning method for a feature network and a base network capable of estimating uncertainty according to another embodiment of the present disclosure.
FIG. 3 shows an example of a structure of a model actually implementing a learning method of a feature network and a base network according to still another embodiment of the present disclosure.
FIG. 4 shows an example of a process of calculating backpropagation in a learning process.
FIG. 5 shows an example of data transmission/reception of a mobility device in communication with another device.
FIG. 6 shows an example of constituent modules of a mobility device according to the present disclosure.

### DETAILED DESCRIPTION OF THE INVENTION

Hereinafter, examples of the present disclosure are described in detail with reference to the accompanying drawings so that those having ordinary skill in the art may easily implement the present disclosure. However, examples of the present disclosure may be implemented in various different ways and thus the present disclosure is not limited to the examples described herein.

In describing examples of the present disclosure, well-known functions or constructions have not been described in detail since a detailed description thereof may have unnecessarily obscured the essence of the present disclosure. The same constituent elements in the drawings are denoted by the same reference numerals and a repeated or duplicative description of the same elements has been omitted.

In the present disclosure, when an element is simply referred to as being "connected to", "coupled to" or "linked to" another element, this may mean that an element is "directly connected to", "directly coupled to", or "directly linked to" another element or this may mean that an element is connected to, coupled to, or linked to another element with another element intervening in between. In addition, when an element "includes" or "has" another element, this means that one element may further include another element without excluding another component unless specifically stated otherwise.

In the present disclosure, the terms "first", "second", etc. are only used to distinguish one element from another and do not limit the order or the degree of importance between the elements unless specifically stated otherwise. Accordingly, a first element in an example may be termed a second element in another example, and, similarly, a second element in an example could be termed a first element in another example, without departing from the scope of the present disclosure.

In the present disclosure, elements are distinguished from each other for clearly in describing each feature, but this does not necessarily mean that the elements are separated. In other words, a plurality of elements may be integrated in one hardware or software unit, or one element may be distributed and formed in a plurality of hardware or software units. Therefore, even if not mentioned otherwise, such integrated or distributed examples are included in the scope of the present disclosure.

In the present disclosure, elements described in various examples do not necessarily mean essential elements, and some of them may be optional elements. Therefore, an example composed of a subset of elements described in an example is also included in the scope of the present disclosure. In addition, examples including other elements in addition to the elements described in the various examples are also included in the scope of the present disclosure.

The advantages and features of the present disclosure and the ways of attaining them should become apparent to those of ordinary skill in the art with reference to examples of the present disclosure described below in detail in conjunction with the accompanying drawings. The examples of the present disclosure, however, may be embodied in many different forms and should not be construed as being limited to the specific examples set forth herein. Rather, the examples described herein are provided to make this disclosure more complete and to fully convey the scope of the present disclosure to those having ordinary skill in the art to which the present disclosure pertains.

In the present disclosure, each of phrases such as "A or B", "at least one of A and B", "at least one of A or B", "A, B or C", "at least one of A, B and C", and each of the phrases such as "at least one of A, B or C" and "at least one of A, B, C or combination thereof" may include any one or all possible combinations of the items listed together in the corresponding one of the phrases.

In the present disclosure, expressions of location relations used in the present specification such as "upper", "lower", "left" and "right" are employed for the convenience of explanation, and when drawings illustrated in the present specification are reversed, the location relations described in the specification may be inversely understood. When a component, device, element, or the like of the present disclosure is described as having a purpose or performing an operation, function, or the like, the component, device, or element should be considered herein as being "configured to" meet that purpose or perform that operation or function.

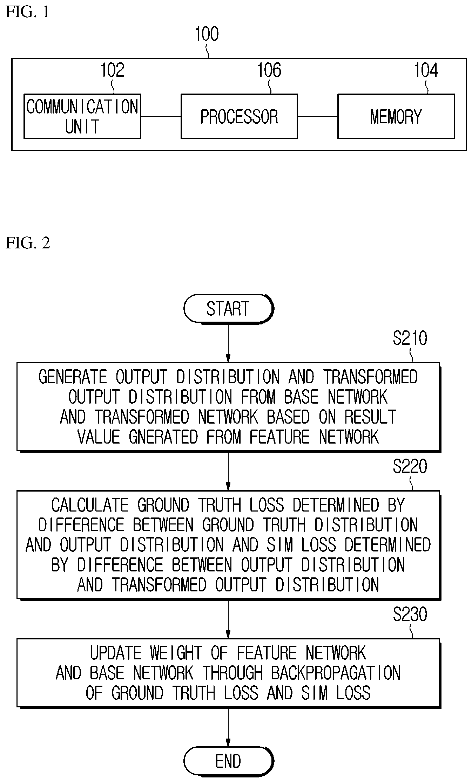

Hereinafter, a learning device implementing a learning method of an AI model inferring uncertainty according to an embodiment of the present disclosure will be described with reference to FIG. 1. FIG. 1 is a view schematically showing constituent modules of a learning device according to an embodiment of the present disclosure.

Referring to FIG. 1, a learning device 100 may train an AI model 305 that produces outputs in the form of distribution by using suitable input data for each task. More specifically, the learning device 100 may make the AI model 305 learn so that an output of the AI model 305 can be used as a robust inference result of the epistemic uncertainty involved in the AI model 305 itself.

In the present disclosure, a task may include at least one of object detection, semantic segmentation, depth estimation or pose estimation but is not limited thereto and may include every task capable of outputting a result by transforming the result in the form of distribution. The AI model 305 according to the present disclosure may include any artificial neural network structure capable of performing the above-described task.

Specifically, the learning device 100 may use a transformed network 320 that is generated by reflecting adaptive noise in a base network 315 so that an output distribution from the AI model 305 consisting of a feature network 310 and the base network 315 can be used as an inference result for uncertainty of the model itself.

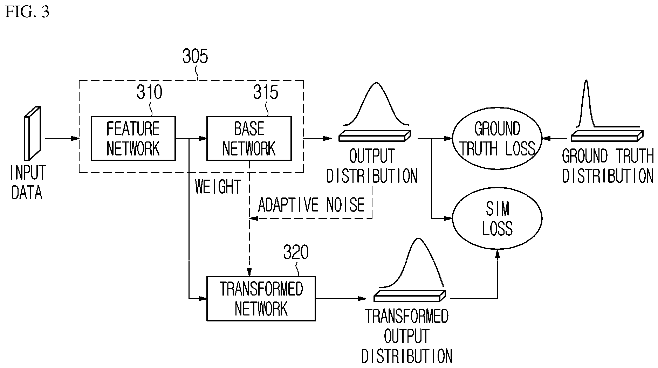

The adaptive noise is noise sampled based on variance of output distributions that are output by the AI model 305, and the transformed network 320, which is generated by reflecting the adaptive noise in a weight (or parameter) of the copied base network 315, may follow a similar output distribution to the base network 315. This will be described in detail through FIG. 2 and FIG. 3.

A transformed network according to the present disclosure may be regarded as a structure belonging to the AI model 305 or may be a separate member from the AI model 305. Herein, the network or the model may be variously referred to as a neural network, a learning model, an artificial neural network, or similar terms.

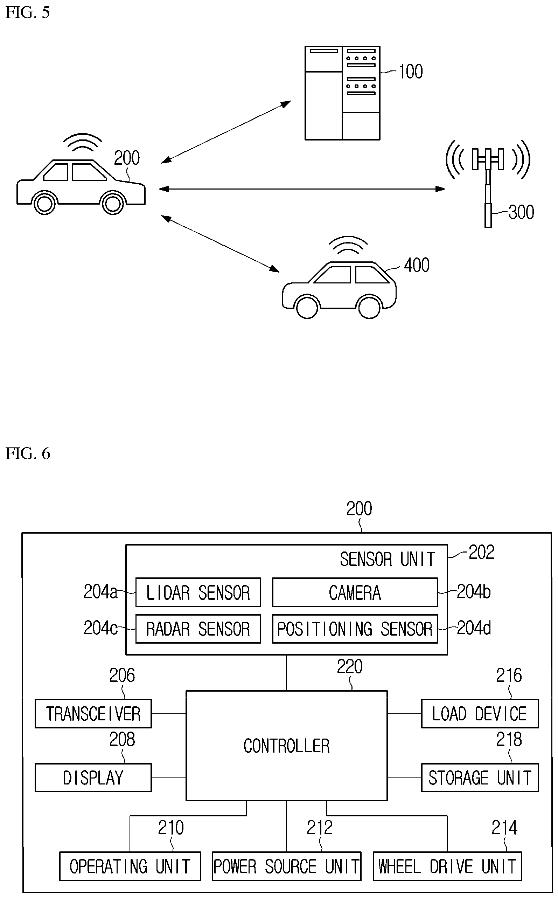

In a process where the learning device 100 makes the AI model 305 learn, the learning device 100 may calculate outputs of the base network 315 and the transformed network 320 based on a result value generated from the feature network 310. The learning device 100 may be a device that updates (that is, trains) weights of the feature network 310 and the base network 315 based on the loss that is calculated through a difference between the outputs of the base network 315 and the transformed network 320 and the ground truth. The learning device 100 may distribute the AI model 305, which is trained to infer uncertainty of the model through an output distribution that is produced, to a mobility device (refer to 200 of FIG. 6), and the mobility device 200 may use the distributed AI model 305 for driving control.

The mobility device 200 may refer to a device capable of moving. The mobility device 200 may be any one of a ground vehicle driven on the ground, a moving robot controlled autonomously or remotely, and a working robot for a specific purpose. In addition, the mobility device 200 is not limited to the ground mobility device but may be, for example, an aerial mobility device, a water mobility device for water transportation or an underwater mobility device (e.g., submarine). The mobility device 200 may be driven autonomously or manually. The autonomously-driven mobility device 200 may be implemented by either semi-autonomous driving or full-autonomous driving. Full autonomous driving may be provided as autonomous movement under the complete control of a controller of the mobility device 200 without a user's intervention even in an uncertain driving situation. Semi-autonomous driving may be provided as autonomous movement that requires a driver's intervention in a specific driving situation. When such a situation occurs, semi-autonomous driving may be implemented such that the controller of the mobility device 200 disables autonomous driving and switches control to the user, and thus the user performs manual driving. According to the autonomous driving levels defined by the Society of Automotive Engineers (SAE), semi-autonomous driving may correspond to the autonomous driving levels 1 to 4, and full autonomous driving may correspond to the level 5.

The learning device 100 may be a device such as a server provided separately from the mobility device 200,operated bya vehicle manufacturer or a management organization providing autonomous driving services. If the learning device 100 is a server operated by a vehicle manufacturer or a management organization supporting autonomous driving, the learning device 100 may receive connected data from the mobility device 200 or transmit data necessary for autonomous driving. In order to support autonomous driving or various services of the mobility device 200, the learning device 100 may transmit various information and software modules used for controlling the mobility device 200 to the mobility device 200 in response to a request and data transmitted from the mobility device 200 and a user device. The description of the present disclosure will focus on the function of the learning device 100 related to a learning method according to an embodiment.

The learning device 100 may include a communication unit 102, a memory 104, and a processor 106. The communication unit 102 may support mutual communication with mobility devices 200 and 400 and an ITS device 300. In the present disclosure, the communication unit 102 may be a communication interface that receives various data and networks (or algorithms) used for training a learning model supporting the driving and convenience functions of the mobility device 200 and transmits information and networks related to the learning model to the mobility device 200. In addition, the communication unit 102 may be a communication module that receives data generated or stored during driving from the mobility device 200 and transmits information for supporting driving such as map information, environmental information for recognizing objects around the mobility device 200, traffic information, and weather information to the mobility device 200. The communication unit 102 may be a communication module that transmits an application related to driving and convenience functions.

The memory 104 may store a program and various data for controlling the learning device 100, load the program at a request of the processor 106, or read and record the data. The memory 104 may manage the AI model 305 and learning data used for learning of the model. The AI model 305 may be configured to include functional modules 310 and 315 illustrated in FIG. 3, which will be described below. Learning data may include images collected from the plurality of mobility devices 200 and 400 and/or a conventional database for learning data, a depth map, and depth information provided in a point cloud format. Apart from the above-described data, the memory 104 may also hold an application for implementing the driving and convenience functions of the mobility device 200, map information, traffic information, weather information, and other various information affecting driving.

The processor 106 may perform overall control of the learning device 100. The processor 106 may be configured to execute applications and instructions stored in the memory 104. Specifically, using the above-described learning data, the processor 106 may control the learning device 100 to train a learning model stored in the memory 104 and distribute the trained learning model to the mobility device 200. A learning model used for training may include the AI model 305, that includes the feature network 310 and the base network 315.

Through the training, the processor 106 may determine the functional modules of FIG. 3 constituting a learning model, that is, a learnable parameter for constructing a sub-model. In addition, the processor 106 may receive feedback information according to the operation of the learning model distributed to the mobility devices 200 and 400, such as the AI model 305 and data of the same type as the above-described learning data from the mobility devices 200 and 400, thenupdate the AI model 305 based on the received information and data. The processor 106 may distribute the updated AI model 305 to the mobility devices 200 and 400.

Specifically, the processor 106 may output an output distribution in the form of distribution from input data through the AI model 305 or perform a task based on the AI model 305 and transform output values, which are generated while the task is being performed, into a distribution form.

In addition, based on a result value generated from the feature network 310 of the AI model, the processor 106 may output an output distribution from the base network and generate a transformed output distribution from a transformed network that is generated by reflecting adaptive noise in the base network. Furthermore, the processor 106 may calculate a ground truth (GT) loss determined by a difference between ground truth with a distribution form classified from learning data (hereinafter, ground truth distribution) and an output distribution and a similarity (sim) loss determined by a difference between the output distribution and a transformed output distribution.

As another example, in a learning process of the AI model 305, the processor 106 may use ground truth classified from learning data including information on the class of an object. Accordingly, the processor 106 may calculate a ground truth loss determined by a difference from an output result as a task performance result from object detection and classification of the AI model 305 and a sim loss determined by a difference between the result and a result output from the transformed network 320 with the same structure as the base network 315. Hereinafter, for convenience of description, a ground truth distribution in the form of distribution will be mainly described as ground truth data in the learning process of the AI model 305.

In addition, the processor 106 may perform training of the AI model 305 by updating the weights of the feature network 310 and the base network 315 through backpropagation of a ground truth loss and a sim loss.

Furthermore, the processor 106 may perform processing to support the driving and convenience functions of the mobility device 200. In the present disclosure, as an example, the processor 106 may be implemented as a single processing module. As another example, the above-described processing may be distributively performed in a plurality of processing modules, and the processor 106 may commonly refer to a plurality of processing modules in the present disclosure.

Hereinafter, a learning method of the AI model according to another embodiment of the present disclosure will be described in detail through FIG. 2 to FIG. 4.

FIG. 2 is a flowchart of a learning method of a feature network and a base network capable of estimating uncertainty according to another embodiment of the present disclosure. FIG. 3 is a view showing a structure of a model actually implementing a learning method of a feature network and a base network according to still another embodiment of the present disclosure. In FIG. 3, the model implementing the learning method may be a software module processed by the processor 106, and the processor 106 may process what is requested from the modules listed in FIG. 3.

Although the description of the present disclosure mainly focuses on training of the AI model 305 according to an embodiment in the learning device 100, the learning method of the AI model 305 to be described below may be distributively processed between the learning device 100 and another device within a scope not violating the description below. For example, another device may be another server and/or mobility devices 200 and 400. Hereinafter, for convenience of explanation, the processor 106 may be abbreviated as the learning device 100, or these terms may be used interchangeably.

Referring to FIG. 2, the processor 106 of the learning device 100 may generate an output distribution and a transformed output distribution from the base network 315 and the transformed network 320 based on a result value generated from the feature network 310 (S210).

The feature network 310 is an artificial neural network capable of analyzing the feature of input data, and a result value generated from the feature network 310 may include information on the feature of the input data that is input. As an example, in case a convolutional neural network (CNN) structure is used as the feature network 310, the feature may mean a feature map that analyzes the feature of input data. As another example, in case a transformer structure is used as the feature network 310, the features may mean information on each patch of input data divided into a predetermined number of patches, a relation between the patches, and a global image context including the context of an image. The structure of the feature network 310 is not limited thereto and may include any artificial neural network structure capable of tasks such as object detection, semantic segmentation, depth estimation and pose estimation within a scope not violating the present disclosure. In addition, the feature network 310 may include an artificial neural network structure that processes a natural language to perform a predetermined task. The feature network 310 may include a weight learnable through a loss based on a difference between an output of the base network 315 and an output of the transformed network 320, the process of which will be described below.

The base network 315 may perform the task to output an output distribution as a result with the form of distribution based on a result value generated from the feature network 310. The base network 315 may be formed in an artificial neural network structure capable of analyzing the result value generated from the feature network 310. As an example, the base network 315 may be formed in a multi-layer perceptron (MLP) structure and use a softmax function as an activation function of an output layer. As another example, the base network 315 may be equipped with an additional module that transforms the result into an output distribution with the form of distribution based on a result obtained by performing the task. The structure of the base network 315 and an activation function for forming the structure are not limited to the above-described example.

Along with the feature network 310, the base network 315 is trained with a loss between an output distribution and an output of the transformed network 320, and the processing thereof will be described below.

The transformed network 320 is generated by reflecting adaptive noise in the base network 315. Specifically, the transformed network 320 may be formed in the same structure as the base network 315 and may be generated by reflecting adaptive noise in a weighted copy of the base network 315. As an example, the transformed network 320 may be generated based on a result obtained by adding the adaptive noise to the weighted copy of the base network 315. Accordingly, in a learning process, as compared to the base network 315, a similar but different weight may be set to the transformed network 320. Thus, the transformed network 320 may output a similar transformed output distribution to an output distribution of the base network 315. That is, the transformed network 320 may be designed to output the transformed output distribution in the same manner as the manner of outputting the above-described output distribution of the base network 315.

A method of generating the transformed network 320 is not limited to the above-described example, and any method capable of outputting a transformed output distribution similar to an output distribution as an output of the base network 315 may be included. As an example, the weight of the transformed network 320 may be set to a value obtained by reflecting an additional factor other than adaptive noise in a weight of the base network 315. As another example, the weight of the transformed network 320 may be set to a value obtained by adding a log scale value of adaptive noise in the weight of the base network 315.

In a learning process of the AI model 305 of the processor 106, as an example, an initial weight of the transformed network 320 may be set to a value obtained by reflecting adaptive noise in an initial weight of the base network 315. Depending on a process of learning, the weight of the transformed network 320 may not be updated by backpropagation but be modified according to a result of reflecting adaptive noise in a weight of the base network during the learning process. In a learning process of the AI model 305 of the processor 106, as another example, an initial weight of the transformed network 320 may use an initial weight of the base network 315, but the weight of the transformed network 320 may be set by reflecting later adaptive noise sampled when an output distribution of the base network 315 is output. Likewise, depending on a process of learning, the weight of the transformed network 320 according to another example may not be updated by backpropagation but be modified according to a result of reflecting adaptive noise in a weight of the base network during the learning process.

Adaptive noise refers to noise that is sampled based on variance of an output distribution that is output by the AI model 305. In case adaptive noise is suitably set, a difference between an output distribution of the base network 315 and a transformed output distribution of the transformed network 320 may be initially large in a learning process, but as the learning proceeds, the adaptive noise may decrease in size, and later in the learning process, the weights of each of the networks 315 and 320 may become similar to each other and outputs may also be similar to each other.

Because of a sim loss generated by adaptive noise, the AI model 305 follows the transformed output distribution, and the processor 106 designs the adaptive noise to follow a ground truth distribution.

Specifically, adaptive noise may be sampled from a Gaussian normal distribution according to a variance (hereinafter, second variance) that is designed to be inversely proportional to a variance (hereinafter, first variance) of an output distribution of the base network 315. Adaptive noise may be sampled to vary according to each training session, and the training session is a hyperparameter and may be differently set according to a user setting or a system specification.

In In instances where adaptive noise is equal to or smaller than a predetermined threshold, an output distribution of the base network 315 and a transformed output distribution of the transformed network 320 are similar so that the size of a sim loss may decrease and thus be inappropriate to the learning of the AI model 305. On the other hand, in In instances where adaptive noise is equal to or greater than a predetermined threshold, a difference between an output of the base network 315 and an output of the transformed network 320 increases and the size of a sim loss increases so that the AI model 305 may not be able to follow a ground truth distribution because of a sim loss based on a difference between an output distribution and a transformed output distribution. That is, the learning of the AI model 305 may collapse.

This means that adaptive noise should be designed to ensure a consistent output since the AI model 305 follows a transformed output distribution according to a sim loss based on a difference between an output distribution of the AI model 305 and the transformed output distribution of the transformed network 320.

In addition, as adaptive noise enables a sim loss to be calculated such that an output distribution and a transformed output distribution become similar as learning proceeds, the reflected adaptive noise to be reflected should have a predetermined or larger size to ensure meaningful learning proceeds.

Furthermore, it is necessary that adaptive noise is designed to enable the AI model 305, which follows a transformed output distribution, to follow a ground truth distribution either based on a sim loss of output between the transformed network 320 and the base network 315 while the adaptive noise changes.

In order to set suitable adaptive noise for the above-described requirement, the processor 106 may sample adaptive noise from a Gaussian normal distribution designed with a second variance that is inversely proportional to a first variance of an output distribution. As an example, the processor 106 may use Gaussian noise sampled from the Gaussian normal distribution as adaptive noise.

If the processor 106 is designed to sample adaptive noise by the above-described method, the AI model 305 may produce a consistent output based on a first variance of an output distribution being equal to or less than a predetermined threshold, while an increasing size of a second variance inversely proportional to the first variance increases reflected adaptive noise of the transformed network 310, so that meaningful learning may proceed (that is, follow a transformed output distribution) because of an increased sim loss.

On the contrary, even if the AI model 305 produces different outputs based on the first variance of the output distribution being equal to or greater than the predetermined threshold, the AI model 305 may follow a ground truth distribution because of decreased adaptive noise based on the second variance being decreased.

In addition, in order to set adaptive noise according to the above-described requirement, the processor 106 may reflect a scaling factor into a result sampled from a Gaussian normal distribution according to a second variance. As an example, the processor 106 may use a result obtained by reflecting the scaling factor in the Gaussian noise sampled from the Gaussian normal distribution as adaptive noise.

At an initial stage of learning, it is important that an output distribution, which is an output of the base network 315 of the AI model 305 quickly follows a ground truth distribution. Accordingly, the reflection of a scaling factor by the processor 106 may be designed to enable an initial output distribution of the AI model 305 to follow a ground truth distribution as learning proceeds. In addition, the reflection of a scaling factor by the processor 106 may be designed to enable an output distribution of the AI model 305 to be absorbed in a result sampled from a Gaussian normal distribution so that the result does not decay and the output distribution follows a transformed output distribution later in the learning.

As an example, if the learning rate of the AI model 305 decays, the processor 106 may generate a scaling factor to be inversely proportional to the learning rate. Furthermore, when the learning rate decays as learning proceeds and the scaling factor increases, the processor 106 reflects the scaling factor in a result sampled from a Gaussian normal distribution to make adaptive noise determined based on the result.

For example, the processor 106 may multiply the result and a relatively small scaling factor generated based on a relatively high learning rate at an early stage of learning in order for the AI model 305 to be trained to make an output distribution of the AI model 305 follow a ground truth distribution at the early stage of learning.

As a relatively small scaling factor is multiplied by a result sampled from a Gaussian normal distribution, the transformed network 320 is designed by relatively low adaptive noise, and the AI model 305 may be trained to follow a ground truth distribution based on the decaying impact of sim loss according to a difference between an output distribution and a transformed output distribution.

As an example, a scaling factor may be designed to be set to a value between 0 and 1, and the scaling factor may be designed to converge to 1 along with the decay of the learning rate. In this case, at an early stage of learning, the scaling factor converging on 0 is multiplied by a result sampled from a Gaussian normal distribution in order for the value of calculated adaptive noise to become close to 0, and thus a sim loss based on a difference between an output distribution and a transformed output distribution decreases, which enables the AI model 305 to be learned to follow a ground truth distribution. On the other hand, at a later stage of learning, the scaling factor converging on 1 is multiplied by a result sampled from a Gaussian normal distribution such that adaptive noise is determined based on the sampled result, and thus the AI model 305 may be learned to ultimately follow a transformed output distribution such that an output distribution contributes to inferring the uncertainty of the model itself.

As another example, the processor 106 may generate a scaling factor to be proportional to a learning rate. As learning progresses, when the scaling factor decays along with the decaying learning rate, the processor 106 may reflect the scaling factor in a result sampled from a Gaussian normal distribution so that adaptive noise is determined based on the sampled result.

For example, in order to enable the AI model 305 to be learned so that an output distribution of the AI model 305 at an early stage of learning follows a ground truth distribution, the processor 106 may divide the result by a relatively large scaling factor that is generated based on a relatively high learning rate at the early stage of learning.

A method of generating adaptive noise by reflecting a scaling factor in the result by the processor 106 is not limited to the above-described example, but it is possible to use any method that reflects a scaling factor generated based on a decaying learning rate so that a ground truth distribution is followed according to the progress of learning and a transformed output distribution is meaningfully followed.

Next, the processor 106 of the learning device 100 calculates a ground truth loss determined by a difference between a ground truth distribution and an output distribution and a sim loss determined by a difference between an output distribution and a transformed output distribution (S220). The processor 106 may calculate the ground truth loss based on a loss function that is determined by a form of ground truth data used for learning.

As an example, the ground truth loss may be calculated using a loss function that contributes to enabling an output distribution of the AI model 305 to follow a ground truth distribution. For example, in case the AI model 305 according to the present disclosure is learned with a ground truth distribution with a distribution form as ground truth data, the processor 106 may use a Kullback-Leibler divergence (KLD) loss function.

On the other hand, in case the AI model 305 according to the present disclosure is learned using ground truth data including an object class and other information, a binary cross-entropy (BCE) loss function may be used. Finally, the processor 106 may transform an output of the AI model 305, which has been completely learned, into a distribution form, and the transformed output in the distribution form (output distribution) may be used as data implying the uncertainty of the AI model 305 itself. A loss function, which may be designated for training the AI model 310 according to the present disclosure, is not limited to the above-described example.

Likewise, the processor 106 calculates a sim loss by a loss function that contributes to enabling an output distribution of the base network 315 to follow a transformed output distribution of the transformed network 320. That is, the processor 106 may designate and use a loss function that decays a difference of output result between the base network 315 and the transformed network 320 based on a form of an output result of the base network 315.

For example, because the transformed network 320 formed in the same structure as the base network 315 produces the same form of outputs as the base network, the processor 106 may calculate a sim loss by using the same loss function as a loss function that is used to calculate a ground truth loss. As an example, when being designed to produce an output distribution with a distribution form of the base network 315, the processor 106 may calculate a sim loss by using a KLD loss function. On the other hand, in case the base network 315 produces a result of a task of classification, the processor 106 may use a BCE loss function.

The AI model 305 may be trained to follow a transformed output distribution through a sim loss despite a change of weight in a learning process. Consequently, the learning method according to the present disclosure may include searching for a weight capable of generating a consistent output for input data through a sim loss. That is, because of a sim loss generated by the presence of the transformed network 320, the AI model 305 may be trained through the learning method according to the present disclosure which shares a similar characteristic to a method using multiple models or a multi-output technique.

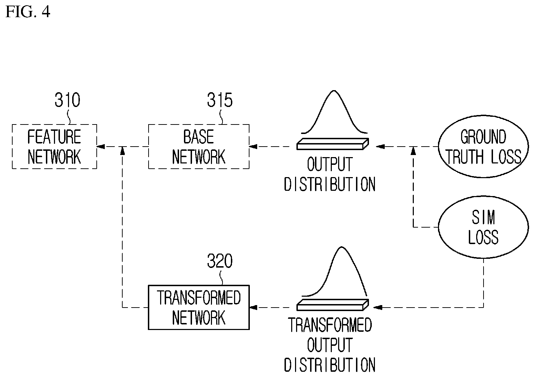

Next, the processor 106 updates weights of the feature network 310 and the base network 315 through backpropagation of a ground truth loss and a sim loss (S230). For convenience of understanding, this will be described by using FIG. 4.

FIG. 4 is a view showing a process of calculating backpropagation in a learning process. Referring to FIG. 4, the processor 106 updates the weights by propagating the ground truth loss and the sim loss to the base network 315 and the feature network 310. Likewise, the processor 106 updates the weight of the feature network 310 through the transformed network 320 in order to consider the degree to which the weight of the feature network 310 directly contributes to generating the sim loss. Specifically, because the weight of the transformed network 320 is determined not by learning but based on the weight of the base network 315 and adaptive noise, the feature network 310 may be learned while the weight is frozen.

Finally, the feature network 310 and the base network 315 may repeat the above-described learning process until the loss values (ground truth loss and sim loss) of a loss function, which enable a ground truth distribution and a transformed output distribution, converge on a predetermined value or reach a minimum value.

According to the learning method according to the present disclosure, without using multiple models or a multi-output technique, it is possible to train a single model to produce a result value that enables to the estimation of the uncertainty of the model itself. In addition, according to the present disclosure, it is possible to overcome limitations in the memory required for using multiple models and a multi-output technique for estimating uncertainty of an existing model itself and the inference speed of the above-described technique.

After training is completed, the learning device 100 may transmit the trained AI model 106 to the mobility device 200, and the mobility device 200 may handle the analysis of information obtained from the sensor unit 202 and driving control by using the AI model 106.

Hereinafter the mobility device 200 receiving the AI model 106 completely trained in FIG. 2 from the learning device 100 and another device communicating with the mobility device 200 will be described.

FIG. 5 shows a view exemplifying data transmission/reception of a mobility device in communication with another device.

As described in FIG. 1, the mobility device 200 may refer to a device capable of moving to a specific point. In the present disclosure, the mobility device 200 is described by an example of a vehicle driven on the ground, but the present disclosure may also be applied to a mobility device for air or water transportation. As described in FIG. 1, the mobility device 200 may be driven by being controlled in autonomous driving, and the autonomous driving may be implemented by semi-autonomous driving or full-autonomous driving.

The mobility device 200 may be driven based on electric energy or fossil energy. In the case of electric energy, for example, the mobility device 200 may be a pure battery-based mobility driven only by a high-voltage battery or employ a gas-based fuel cell as an energy source. In addition, the fuel cell may use various types of gas capable of generating electric energy, and for example, the gas may be hydrogen. However, without being limited thereto, various gases are applicable. In the case of fossil energy, the mobility device 200 is driven based on fuels such as gasoline, diesel, or liquefied gas, and may be equipped with an engine that drives a wheel drive unit 214 by combustion of the fuel. The engine may be included in an energy generator 212 from a perspective of providing a driving torque of a wheel to the wheel drive unit 214. As another example, the mobility device 200 may be driven by a hybrid scheme of electric energy and fossil energy.

Meanwhile, the mobility device 200 may communicate with other devices 100 and 300 or another mobility device 400. For example, another device may include the learning device 100 for supporting various control, state management and driving of the mobility device 200, the ITS device 300 for receiving information from an intelligent transportation system (ITS), and various types of user devices. For example, as described in FIG. 1, the learning device 100 is an external device operated by a vehicle manufacturer or a management organization providing an autonomous driving service.

For example, the ITS device 300 may be a roadside unit (RSU), and the ITS device 300 may assist a user in driving their own car or support autonomous driving of the mobility device 200 by exchanging vehicle recognition data, driving control and situation data, environment data surrounding a vehicle, and map data through V2I with the mobility device 200. Through V2V with another mobility device 400, the mobility device 200 may support a driver's operation of their own car or autonomous driving by exchanging the above-listed data.

The mobility device 200 may communicate with another vehicle or another device based on cellular communication, wireless access in vehicular environment (WAVE) communication, dedicated short range communication (DSRC) or short range communication, or any other communication scheme.

For example, the mobility device 200 may use LTE as a cellular communication network, a communication network such as 5G, a WiFi communication network, a WAVE communication network, and the like to communicate with the learning device 100, the ITS device 300, and another mobility device 400. As another example, DSRC used in the mobility device 200 may be used for mobility-to-mobility communication. A communication scheme among the mobility device 200, the learning device 100, the ITS device 300, another mobility device 400, and a user device is not limited to the above-described embodiment.

FIG. 6 shows a view schematically showing constituent modules of a mobility device according to the present disclosure. The mobility device 200 of FIG. 6 exemplifies a ground vehicle.

The mobility device 200 may include the sensor unit 202, a transceiver 206 and a display 208.

The sensor unit 202 may be equipped with various types of detectors for sensing various states and situations occurring in external and internal environments of the mobility device 200 and for identifying location information of the mobility device 200. That is, the sensor unit 202 may be configured as a multi-sensor module including heterogeneous sensors to obtain sensing data detected from each of the sensors.

Specifically, the sensor unit 202 may be equipped with a Lidar sensor 204a, a camera 204b as a video sensor, and a radar sensor 204c for recognizing dynamic and static objects present around the mobility device 200 and have a positioning sensor 204d capable of obtaining location information of a vehicle. The sensor unit 202 may obtain sensor data including three-dimensional recognition data, perception/observation data, and positioning information by the above-described sensors.

The Lidar sensor 204a may be a sensor that observes a surrounding environment based on laser scanning and perceives a three-dimensional shape of an object.

The camera 204b may obtain two-dimensional image data about a surrounding environment and objects or images (or image data) with depth information in time series. The camera 204b may be installed in a plurality of portions of the mobility device 200 so that a plurality of images or a multi-view may be obtained for the surrounding environment of the mobility device 200.

For example, the radar sensor 204c may irradiate an electromagnetic wave with a predetermined wavelength and thus detect a behavior of an object based on an electromagnetic wave reflected from the object. For example, the behavior of an object may include the presence of the object, whether the object moves, a distance between the mobility device 200 and the object, a speed of the object, and a movement direction.

Apart from the positioning sensor 204d, the sensor unit 202 may be equipped with a gyro sensor, an acceleration sensor, a wheel sensor, an autometer, a speed sensor and the like, in order to identify its own location, driving position, and speed. In addition, to monitor a user inside the mobility device 200, a condition of an occupant, and an operating situation of an internal device of the mobility device 200 that a user is capable of maneuvering, the sensor unit 202 may have an inward-facing image sensor, a biosensor for detecting biosignals of a driver and an occupant, and various detection modules for detecting the operation and state of an internal device.

The present disclosure mainly describes sensors of the sensor unit 202 referred to for description of an embodiment but may further include a sensor for detecting various situations not listed herein.

The transceiver 206 may support mutual communication with the learning device 100, the ITS device 300, and the neighbor mobility device 400. In the present disclosure, the transceiver 206 may transmit data generated or stored during driving to the learning device 100 and receive data and software modules transmitted from the learning device 100. In the present disclosure, the mobility device 200 may transmit and receive data used in the method according to the present disclosure to and from the outside through the transceiver 206.

The display 208 may serve as a user interface. By the controller 106, the display 208 may display an operating state and a control state of the mobility device 200, path/traffic information, information on an energy remaining quantity, content requested by a driver, and the like to be output. The display 208 may be configured as a touch screen capable of sensing a driver input and receive a request of a driver indicated to the processor 106.

Meanwhile, the mobility device 200 may include an operating unit 210, a power source unit 212, the wheel drive unit 214, and a load device 216.

The operating unit 210 may be equipped with at least one module for implementing a driving operation and perform at least one driving operation of longitudinal control like acceleration/deceleration and transverse control like steering. The operating unit 210 may be equipped with not only a pedal and a steering wheel accepting a user's request for the control but also various operating modules for generating a driving operation according to the request in the wheel drive unit 214.

The power source unit 212 may generate and supply power and electricity used for a driving power system like the wheel drive unit 214 and the load device 216. In case the mobility device 200 is driven based on electric energy, for example, the power source unit 212 may be configured as an electric battery or be configured as a combination of an electric battery and a fuel cell for charging the battery. In the case of a combination of an electric battery and a fuel cell, the power source unit 212 may include a tank for storing a material used to produce power of the fuel cell, for example, hydrogen gas. In case the mobility device 200 is driven based on fossil energy, the power source unit 212 may be configured as an internal combustion engine.

The wheel drive unit 214 may include a plurality of wheels, a driving force transfer module for generating and giving a driving force to wheels or for transferring a driving force, a braking module for decelerating the driving of wheels, and a steering module for realizing transverse control of wheels. In case the mobility device 200 is driven based on electric energy, a driving force transfer module may be configured as a motor module that generates a driving force based on electric power output from an electric battery. In case the mobility device 200 is operated based on fossil energy, a driving force transfer module may be equipped with a transmission and a gear module that transfers power of an internal combustion engine.

In the present disclosure, the operating unit 210 and the wheel drive unit 214 may constitute an actuating unit that externally implements a driving motion, a driving pose and the like by transferring power generated from the power source unit 212. In the present disclosure, the actuating unit is referred to as actuator, and these terms may be used interchangeably.

The load device 216 may be an auxiliary equipment mounted on the mobility device 200, which consumes power supplied from the power source unit 212 by use of an occupant or a user. In the present disclosure, the load device 216 may be a type of electric device for non-driving purpose excluding a driving power system like the wheel drive unit 214. For example, the load device 216 may be an air-conditioning system, a light system, a seat system, and various devices installed in the mobility device 200.

In addition, the mobility device 200 may include a storage unit 218 and a controller 220. The storage unit 218 may store an application and various data for controlling the mobility device 200, load the application at a request of the controller 220, or read and record the data. In the present disclosure, the storage unit 218 may receive and manage the completely trained AI model 106 from the learning device 100. In addition, the storage unit 218 may receive and manage information necessary for driving such as map information, traffic information, weather information and accident information.

The controller 220 may perform overall control of the mobility device 200. The controller 220 may be configured to execute an application and instructions stored in the storage unit 218. Specifically, the controller 220 may use the AI model 305 stored in the storage unit 218 to perform tasks such as semantic segmentation and object detection using information from the sensor unit 202. The controller 220 may utilize various data recognized from the Lidar sensor 204a, the camera 204b, the radar sensor 204c, and the positioning sensor 204d and an output result of the AI model 305 for autonomous driving control. Specifically, the controller 220 may utilize an output distribution produced by the stored AI model 305 as feedback information on information or instructions used for the autonomous driving control.

In the present disclosure, as an example, the controller 220 may be implemented as a single processing module. As another example, the above-described processes may be handled by being distributed among a plurality of processing modules, and the controller 220 may commonly refer to a plurality of processing modules.

While the methods of the present disclosure described above are represented as a series of operations for clarity of description, it is not intended to limit the order in which the steps are performed. The steps described above may be performed simultaneously or in different order as necessary. To implement the method according to the present disclosure, the steps may further include different or additional steps, exclude certain steps, or involve other steps not mentioned.

The various examples of the present disclosure do not provide an exhaustive list of all possible combinations and are intended to describe representative aspects of the present disclosure. Aspects or features described in the various examples may be applied independently or in combination of two or more.

In addition, various examples of the present disclosure may be implemented in hardware, firmware, software, or a combination thereof. In the case of implementing the present disclosure by hardware, the present disclosure can be implemented with application specific integrated circuits (ASICs), Digital signal processors (DSPs), digital signal processing devices (DSPDs), programmable logic devices (PLDs), field programmable gate arrays (FPGAs), general processors, controllers, microcontrollers, microprocessors, etc.

The scope of the disclosure includes software or machine-executable commands (e.g., an operating system, an application, firmware, a program, etc.) for enabling operations according to the methods of various examples to be executed on an apparatus or a computer, a non-transitory computer-readable medium having such software or commands stored thereon and executable on the apparatus or the computer.

## Claims

1. A single model-based learning method for estimating uncertainty of an artificial intelligence (AI) model, the method comprising:
based on a result value generated from a feature network of the AI model, generating, by a processor, an output distribution from a base network and generating a transformed output distribution from a transformed network that is generated by reflecting adaptive noise in the base network;
calculating, by the processor, a ground truth loss determined based on a difference between a ground truth distribution and the output distribution and a similarity loss determined based on a difference between the output distribution and the transformed output distribution; and
training the AI model, using the processor, consisting of the feature network and the base network by updating a weight of the feature network and the base network through backpropagation of the ground truth loss and the similarity loss.

2. The single model-based learning method of claim 1, wherein the adaptive noise is sampled to continuously vary, by the processor, according to each training session from a Gaussian normal distribution, the sampling being based on a second variance that is inversely proportional to a first variance of the output distribution.

3. The single model-based learning method of claim 2, wherein the adaptive noise is generated, by the processor, by reflecting a scaling factor, which is inversely proportional to a learning rate, in a result sampled from the Gaussian normal distribution.

4. The single model-based learning method of claim 3, wherein the scaling factor is reflected, by the processor, to be absorbed in the result sampled from the Gaussian normal distribution so that the adaptive noise is determined by the second variance as the learning rate decays.

5. The single model-based learning method of claim 4, wherein the scaling factor is designed to have a value between 0 and 1 and is configured to converge on 1 as the learning rate decays, and the scaling factor being multiplied by the result sampled from the Gaussian normal distribution.

6. The single model-based learning method of claim 1, wherein a weight of the transformed network is updated by a result obtained by reflecting the adaptive noise in the weight of the base network.

7. The single model-based learning method of claim 1, wherein the transformed network is generated with a same structure as the base network, the transformed network being based on a weight that is determined by adding the adaptive noise to the weight of the base network.

8. The single model-based learning method of claim 1, wherein the ground truth loss is calculated based on a loss function determined by a form of ground truth data used for learning the AI model.

9. The single model-based learning method of claim 1, wherein the similarity loss is calculated using a loss function that contributes to enabling the output distribution to follow the transformed output distribution.

10. The single model-based learning method of claim 1, wherein the feature network and the base network are designed based on a task of the AI model, and the output distribution is generated using an activation function that transforms an output of the base network into a distribution form.

11. A single model-based learning device for estimating uncertainty of an artificial intelligence (AI) model, the single model-based learning device comprising:
a memory configured to store at least one instruction; and
a processor configured to execute the at least one instruction stored in the memory,
wherein the processor is further configured to:
based on a result value generated from a feature network, generate an output distribution from a base network and generate a transformed output distribution from a transformed network that is generated by reflecting adaptive noise in the base network,
calculate a ground truth loss based on a difference between a ground truth distribution and the output distribution and a similarity loss based on a difference between the output distribution and the transformed output distribution, and
train the AI model consisting of the feature network and the base network by updating a weight of the feature network and the base network through backpropagation of the ground truth loss and the similarity loss.

12. The single model-based learning device of claim 11, wherein the adaptive noise is sampled to continuously vary during each training session from a Gaussian normal distribution according to a second variance that is inversely proportional to a first variance of the output distribution.

13. The single model-based learning device of claim 12, wherein the adaptive noise is generated by reflecting a scaling factor, which is inversely proportional to a learning rate, in a result sampled from the Gaussian normal distribution.

14. The single model-based learning device of claim 13, wherein the scaling factor is reflected to be absorbed in the result sampled from the Gaussian normal distribution so that the adaptive noise is determined by the second variance as the learning rate decays..

15. The single model-based learning device of claim 14, wherein the scaling factor is designed to be between 0 and 1, converging on 1 as the learning rate decays, and is multiplied by the result sampled from the Gaussian normal distribution.

16. The single model-based learning device of claim 11, wherein a weight of the transformed network is modified by reflecting the adaptive noise in the weight of the base network.

17. The single model-based learning device of claim 11, wherein the transformed network is generated in a same structure as the base network based on a weight that is determined by adding the adaptive noise to the weight of the base network.

18. The single model-based learning device of claim 11, wherein the ground truth loss is calculated based on a loss function determined by a form of ground truth data used for learning the AI model.

19. The single model-based learning device of claim 11, wherein the similarity loss is calculated using a loss function that enables the output distribution to follow the transformed output distribution.

20. The single model-based learning device of claim 11, wherein the feature network and the base network are configured based on a task of the AI model, and the output distribution is generated by an activation function that transforms an output of the base network into a distribution form.

## Amended claims

### Amended claims in accordance with Rule 137(2) EPC.

1. A single model-based learning method performed by a processor (106), the method comprising:
based on a result value generated from a feature network (310) of an AI model (305), generating, by the processor (106), an output distribution from a base network (315) and generating a transformed output distribution from a transformed network (320), wherein the transformed network (320) is generated based on adaptive noise;
calculating, by the processor (106), a ground truth loss determined based on a difference between a ground truth distribution and the output distribution and a similarity loss determined based on a difference between the output distribution and the transformed output distribution; and
training the AI model (305), using the processor (106), consisting of the feature network (310) and the base network (315) by updating a weight of the feature network (310) and the base network (315) through backpropagation of the ground truth loss and the similarity loss.

2. The single model-based learning method of claim 1, wherein the adaptive noise is sampled to continuously vary, by the processor (106), according to each training session from a Gaussian normal distribution, the sampling being based on a second variance that is inversely proportional to a first variance of the output distribution.

3. The single model-based learning method of claim 2, wherein the adaptive noise is generated, by the processor (106), by reflecting a scaling factor, which is inversely proportional to a learning rate, in a result sampled from the Gaussian normal distribution.

4. The single model-based learning method of claim 3, wherein the scaling factor is reflected, by the processor (106), to be absorbed in the result sampled from the Gaussian normal distribution so that the adaptive noise is determined by the second variance as the learning rate decays.

5. The single model-based learning method of claim 4, wherein the scaling factor is designed to have a value between 0 and 1 and is configured to converge on 1 as the learning rate decays, and the scaling factor being multiplied by the result sampled from the Gaussian normal distribution.

6. The single model-based learning method of claim 1, wherein a weight of the transformed network (320) is updated by a result obtained by reflecting the adaptive noise in the weight of the base network (315).

7. The single model-based learning method of claim 1, wherein the transformed network (320) is generated with a same structure as the base network (315), the transformed network (320) being based on a weight that is determined by adding the adaptive noise to the weight of the base network (315).

8. The single model-based learning method of claim 1, wherein the ground truth loss is calculated based on a loss function determined by a form of ground truth data used for learning the AI model (305).

9. The single model-based learning method of claim 1, wherein the similarity loss is calculated using a loss function that contributes to enabling the output distribution to follow the transformed output distribution.

10. The single model-based learning method of claim 1, wherein the feature network (310) and the base network (315) are designed based on a task of the AI model (305), and the output distribution is generated using an activation function that transforms an output of the base network (315) into a distribution form.

11. A single model-based learning device (100) for single model-based learning method, the single model-based learning device (100) comprising:
a memory (104) configured to store at least one instruction; and
a processor (106) configured to execute the at least one instruction stored in the memory (104),
wherein the processor (106) is further configured to:
based on a result value generated from a feature network (310), generate an output distribution from a base network (315) and generate a transformed output distribution from a transformed network (320), wherein the transformed network (320) is generated based on adaptive noise,
calculate a ground truth loss based on a difference between a ground truth distribution and the output distribution and a similarity loss based on a difference between the output distribution and the transformed output distribution, and
train an AI model (305) consisting of the feature network (310) and the base network (315) by updating a weight of the feature network (310) and the base network (315) through backpropagation of the ground truth loss and the similarity loss.

12. The single model-based learning device (100) of claim 11, wherein the adaptive noise is sampled to continuously vary during each training session from a Gaussian normal distribution according to a second variance that is inversely proportional to a first variance of the output distribution.

13. The single model-based learning device (100) of claim 12, wherein the adaptive noise is generated by reflecting a scaling factor, which is inversely proportional to a learning rate, in a result sampled from the Gaussian normal distribution.

14. The single model-based learning device (100) of claim 13, wherein the scaling factor is reflected to be absorbed in the result sampled from the Gaussian normal distribution so that the adaptive noise is determined by the second variance as the learning rate decays..

15. The single model-based learning device (100) of claim 14, wherein the scaling factor is designed to be between 0 and 1, converging on 1 as the learning rate decays, and is multiplied by the result sampled from the Gaussian normal distribution.

16. The single model-based learning device (100) of claim 11, wherein a weight of the transformed network (320) is modified by reflecting the adaptive noise in the weight of the base network (315).

17. The single model-based learning device (100) of claim 11, wherein the transformed network (320) is generated in a same structure as the base network (315) based on a weight that is determined by adding the adaptive noise to the weight of the base network (315).

18. The single model-based learning device (100) of claim 11, wherein the ground truth loss is calculated based on a loss function determined by a form of ground truth data used for learning the AI model (305).

19. The single model-based learning device (100) of claim 11, wherein the similarity loss is calculated using a loss function that enables the output distribution to follow the transformed output distribution.

20. The single model-based learning device (100) of claim 11, wherein the feature network (310) and the base network (315) are configured based on a task of the AI model (305), and the output distribution is generated by an activation function that transforms an output of the base network (315) into a distribution form.
